# EUROPEAN PATENT APPLICATION

(11) **EP 3 133 538 A1**
(43) Date of publication of application: **22.02.2017**
(21) Application number: 15779716.8
(22) Date of filing: 14.04.2015
(51) Int. Cl.: G06Q 10/06, H04L 12/28, H04L 12/70

(54) **WORKFLOW MANAGEMENT APPARATUS, WORKFLOW MANAGEMENT METHOD, AND WORKFLOW MANAGEMENT PROGRAM**

(30) Priority: 15.04.2014 JP 2014083629
(71) Applicant: Tokyo Institute of Technology, Tokyo 152-8550 (JP)
(72) Inventor: DEGUCHI, Hiroshi, Tokyo 152-8550 (JP)
(74) Representative: Schröer, Gernot H.
(86) International application number: PCT/JP2015/061431
(87) International publication number: WO 2015/159873

(57) **Abstract**

A workflow management apparatus 12 holds a transition condition for each stage to be switched to a next stage in a workflow that controls an operation of an external device over a plurality of stages, and stage information indicating a current stage of the workflow. Where there is a partially ordered relation between the stages, if a first and second stage are incomparable, when a third stage can be executed as a next stage of the first stage, and if the third and second stages are incomparable, when a transition condition for the first stage has been fulfilled and a transition condition for the second stage has not been fulfilled, the workflow management apparatus 12 updates the stage information so as to indicate that both the second stage and the third stage to be executed as a stage following the first stage are set for the workflow.

## Description

### [TECHNICAL FIELD]

The present invention relates to a data processing technique, and particularly to a workflow management technique.

### [BACKGROUND ART]

The present inventor proposes a technique for recording a change in energy flow and a change in energy stock that occur in various levels of organizations such as households, business facilities, etc., in the form of energy accounting (see Patent document 1, for example), thereby facilitating systematic energy management. In some cases, an energy event recording apparatus disclosed in Patent document 1 is mounted as a sensor device.

### [Related Art Documents]

### [Patent Documents]

[Patent Document 1] International Publication WO 2013/168419

### [DISCLOSURE OF THE I NVENTI ON]

### [PROBLEM TO BE SOLVED BY THE I NVENTI ON]

In a sensor network, each of multiple sensor devices operates autonomously. In order to provide an integrated service by means of the multiple sensor devices, in some cases, such a sensor network requires synchronous control operations. Examples of such synchronous control operations employed in conventional distributed parallel operations include interrupt control operations, marker detection control operations (e.g., frame synchronization and timing synchronization). However, accompanying an increase in the number of such devices to be synchronously controlled, such a conventional synchronous control technique requires a large amount of data in a complicated form for defining such control operations.

The present invention has been made in order to solve the aforementioned problem. It is a main purpose of the present invention to provide a technique for controlling multiple devices so as to provide an integrated service with high efficiency under an environment in which multiple devices are connected via a network such that they operate autonomously.

### [MEANS TO SOLVE THE PROBLEM]

In order to solve the aforementioned problem, a workflow management apparatus according to an embodiment of the present invention comprises: a transition condition holding unit that holds a transition condition for each stage to be switched to a next stage with respect to a workflow that controls an operation of an external device over multiple stages; a stage information holding unit that holds stage information indicating a current stage of the workflow; a stage notification unit that transmits a notice of the current stage of the workflow to the external device so as to instruct the external device to execute an operation that corresponds to the current stage; and a stage updating unit configured such that, when the current stage transition condition has been fulfilled after an end operation notice for the current stage has been received from the external device, the stage updating unit updates the stage information so as to advance the stage of the workflow. In a case in which there is a partially ordered relation between the stages of the workflow, in a case in which a first stage and a second stage are incomparable, in a case in which a third stage can be executed as a next stage of the first stage, and in a case in which the third stage and the second stage are incomparable, when a transition condition for the first stage has been fulfilled and a transition condition for the second stage has not been fulfilled, the stage updating unit updates the stage information so as to indicate that both the second stage and the third stage to be executed as a next stage of the first stage are set for the workf low.

Another embodiment of the present invention also relates to a workflow management apparatus. The workflow management apparatus comprises: a transition condition holding unit that holds a transition condition for each stage to be switched to a next stage with respect to a workflow that controls an operation of an external device over multiple stages; a stage information holding unit that holds stage information indicating a current stage of the workflow; a stage notification unit that transmits a notice of the current stage of the workflow to the external device so as to instruct the external device to execute an operation that corresponds to the current stage; and a stage updating unit configured such that, when the current stage transition condition has been fulfilled after an end operation notice for the current stage has been received from the external device, the stage updating unit updates the stage information so as to advance the stage of the workflow. In a case in which there is a partially ordered relation between the stages of the workflow, in a case in which a first stage and a second stage are incomparable, and in a case in which a third stage can be executed as a next stage of the first stage and the second stage, when a transition condition for the first stage has been fulfilled and a transition condition for the second stage has not been fulfilled, the stage updating unit updates the stage information such that the second stage is set for the workflow in a state in which the first stage ends. In this case, when the transition condition for the second stage has been fulfilled, the stage updating unit switches the workflow to the third stage.

Yet another embodiment of the present invention relates to a workflow management method. The workflow management method is configured such that, with a workflow that controls an operation of an external device over multiple stages, a computer executes: transmitting a notice of a current stage of the workflow to the external device based on stage information stored in a predetermined storage region and indicating the current stage of the workflow, so as to instruct the external device to execute an operation that corresponds to the current stage; and updating the stage information so as to advance the stage of the workflow when a predetermined transition condition has been fulfilled for the current stage to be switched to a next stage after a notice of completion of an operation for the current stage has been received from the external device. In a case in which there is a partially ordered relation between the stages of the workflow, in a case in which a first stage and a second stage are incomparable, in a case in which a third stage can be executed as a next stage of the first stage, and in a case in which the third stage and the second stage are incomparable, when a transition condition for the first stage has been fulfilled and a transition condition for the second stage has not been fulfilled, in the updating, the stage information is updated so as to indicate that both the second stage and the third stage to be executed as a next stage of the first stage are set for the workflow.

It should be noted that any combination of the aforementioned components or any manifestation of the present invention may be mutually substituted between a method, system, computer program, and a recording medium storing the computer program, and so forth, which are also effective as an embodiment of the present invention.

### [ADVANTAGE OF THE PRESENT INVENTION]

With the present invention, such an arrangement is capable of controlling multiple devices so as to provide an integrated service with high efficiency under an environment in which multiple devices are connected via a network such that they operate autonomously

### [BRIEF DESCRIPTION OF THE DRAWINGS]

Fig. 1 is a diagram showing an example 1 of a distributed cooperative control operation;
Fig. 2 is a diagram showing an example 1 of a distributed cooperative control operation;
Fig. 3 is a diagram showing an example 2 of a distributed cooperative control operation;
Fig. 4 is a schematic diagram showing the range of control provided by the real-world OS.
Fig. 5 is a diagram showing an IOT device control system according to an embodiment;
Fig. 6 is a block diagram showing a function configuration of a workflow management apparatus shown in Fig. 5;
Fig. 7 is a schematic diagram showing a workflow according to the embodiment; and
Fig. 8 is a sequence diagram showing an operation of the IOT device control system.

### [BEST MODE FOR CARRYING OUT THE I NVENTI ON]

### [Description of the outline]

First, description will be made regarding a workflow-based system design in which multiple tasks are queued according to a partially ordered relation. Regardless of whether such multiple tasks are configured as a project task or a routine work task, a workflow, which represents such a set of ordered tasks, functions as a basic unit to be identified for execution. This allows a given task set to be sorted, interpreted, and executed in a systematic manner. In the workflow, a resource is assigned to each task which is a component of the workflow, in order to actually execute the task. This provides a series of operations and services.

Examples of such resources to be assigned in order to actually execute a task include a person, a program, a device, and the like, which will collectively be referred to as an "agent" hereafter. In particular, in a case in which such an agent is connected via a network such as the Internet or the like such that it can communicate with an external device, such a device will also be referred to as an "IOT (Internet Of Things) device".

In conventional techniques, a method has not been proposed for satisfactorily controlling a great number of agents such as various kinds of sensors, controllers, actuators, etc., in a given workflow, so as to manage the parallel operations of such agents with high efficiency. In some cases, given tasks in the workflow have a partially ordered relation instead of a linear ordered relation (i.e., totally ordered relation). For example, multiple tasks are queued so as to enable them to be executed after a given task is executed. In many cases, such multiple tasks can be executed in no particular order. It can be said that such multiple tasks have a parallel relation. In this case, such multiple tasks can be executed in a parallel manner. The term "parallel execution" as used here has a different meaning from that of parallel control operations of multiple agents in a case in which the same task is assigned to the multiple agents.

In a case in which a task defined in the workflow is used as a symbol of a causal sequence for controlling an execution sequence, such a task will be referred to as a "task stage". It is assumed that the operation of each agent that corresponds to the corresponding task stage thus defined in the workflow is described in the form of a computer program for providing each node (e.g., each of various devices such as sensors each assigned to an agent) with autonomous operation. Each node acquires information that indicates the current task stage, and starts up the agent programs that correspond to the task stage. Furthermore, when the operation of each agent for the task stage ends, the agent notifies the workflow side of the end of the operation, and waits for the next task instruction.

A mechanism for controlling the execution sequence of the tasks to be executed by the corresponding agents in the real world will be referred to as a "task manager". It can be said that the task manager functions as a workflow executing engine. The task manger notifies each agent of the task stage to be executed in this stage. Furthermore, the task manager receives a task completion notice from each agent. Furthermore, the task manager advances the task stage as appropriate. As described above, a data flow is generated between the task manager and each agent in order to allow the task management to be performed.

In a case in which each of the agents configured to operate autonomously in a distributed environment are controlled such that they operate as a system in a cooperative manner, such a control operation will be referred to as the "distributed cooperative control operation". In the embodiment, the workflow is employed so as to provide such a distributed cooperative control operation. Also, a system that performs the distributed cooperative control operation so as to allow the autonomous agents to perform an integrated operation in a cooperative manner will be referred to as the "autonomous distributed cooperative system". The present embodiment proposes a management technique for the distributed cooperative workflow that flows between the IOT devices connected via a network.

In the autonomous distributed cooperative control system, a data flow between the agents, i.e., a data stream that flows between the agents, is also important. For example, measurement task execution results and calculation task execution results are required to be transmitted as input data to a calculation task or a control task in a different task stage. It should be noted that such a data flow between the agents may be transmitted without involving the task manager.

In the embodiment, the data flow between the task manager and each agent and the data flow between different agents are provided using a publish/subscribe scheme (which will also be referred to as the "PUB-SUB scheme" hereafter). In the PUB-SUB scheme, a special agent, which will also be referred to as a "broker", is employed so as to allow data to be shared between a transmission source and a transmission destination.

A transmission source agent that applies a tag, which is referred to as the "topic", to data to be received by a transmission destination agent, and then transmits the data with the appended topic to the broker, is referred to as the "publisher". Moreover, an agent that registers a data transfer request with the broker for data with a particular appended topic (i.e., data transmission destination agent) is referred to as the "subscriber". The broker selects the data with the topic registered by the subscriber from among the data published to the broker, and delivers the data thus selected to the subscriber.

The PUB-SUB scheme allows the required data to be transmitted in a multipoint-to-multipoint manner without involving addresses or the like. The embodiment proposes a system employing two data brokers, i.e., a management broker configured to transfer management information between the task manager and the agent with respect to the task stage, and a data broker configured to transfer the data required to execute a task between multiple agents.

Description will be made regarding the basic operations of the task manager and the agent.
(1) The task manager publishes, on the management broker, the task stage names that can be executed in this stage. Each agent registers, on the broker, the task stage name to be executed by the agent itself. When the task stage name thus registered is published, the agent subscribes this information from the management broker. In this stage, the agent executes the task. When the task of the agent ends, the agent publishes a notice of the end of the task stage and the required management information to the management broker. Furthermore, after the agent applies a necessary topic to the data required for a different agent to execute a task, the agent publishes the data including the topic to the data broker.
(2) The task manager judges whether or not a task stage transition can be performed. This judgement is made based on a task transition predicate. The task transition predicate is configured as a program for judging whether or not the task can be switched to the next task stage based on the task end information, the management data, or the like, received from the agent.
   As an example, description will be made regarding a system mounting several hundreds of sensors each configured as an agent so as to measure predetermined environmental states (temperature or the like), and that calculates an average value of the environmental states so as to execute a predetermined control operation. The task transition predicate may be implemented in the task manager of the system. The task transition predicate defines a transition rule such that, when sensors comprising half the total number transmit the task end information after the end of the measurement operations (i.e., task operations) of the corresponding sensors, the next stage transition can be performed. Also, for distributed stream calculation, a task transition predicate may be implemented so as to define a transition rule such that, upon reception of the task end information which indicates that the calculation has been performed normally, the stage transition is performed. Furthermore, a task transition predicate is implemented so as to define a branching algorithm such as a transition from a normal workflow to an emergency workflow when the task manager receives task end information which indicates that the calculation has ended abnormally.
(3) The task manager repeatedly performs the processes described in (1) and (2) so as to provide a handshake for every task stage between itself and the agents configured in the real world. In this case, by publishing the multiple task stage names in parallel, the system allows the task stages to operate in parallel. Furthermore, the multiple agents assigned to the same task stage execute the task in parallel in the real world. With the parallel operations, the judgment result does not change even if the order of the operations is changed or even if a delay occurs. This can be said regardless of whether the parallel control operations are performed in project management by a person or in distributed cooperative control operations using a workflow.

Next, description will be made regarding an example of the distributed cooperative control operation.

### Example 1: Device management and energy accounting control by means of sensors.

In this example, average temperature and lowest illuminance are calculated based on data acquired by multiple temperature sensors and data acquired by multiple illuminance sensors. A controller controls an air conditioner and an illumination device based on the average temperature and the lowest illuminance thus calculated. Furthermore, energy consumption is calculated based on the operation states of the air conditioner and the illumination device. The controller controls an operation for notifying stakeholders of the calculation results.

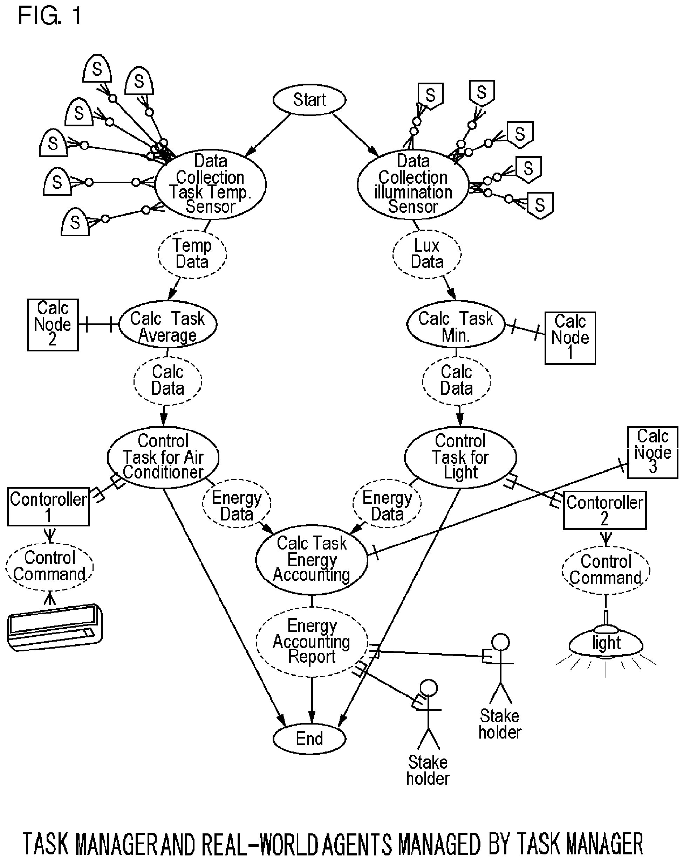

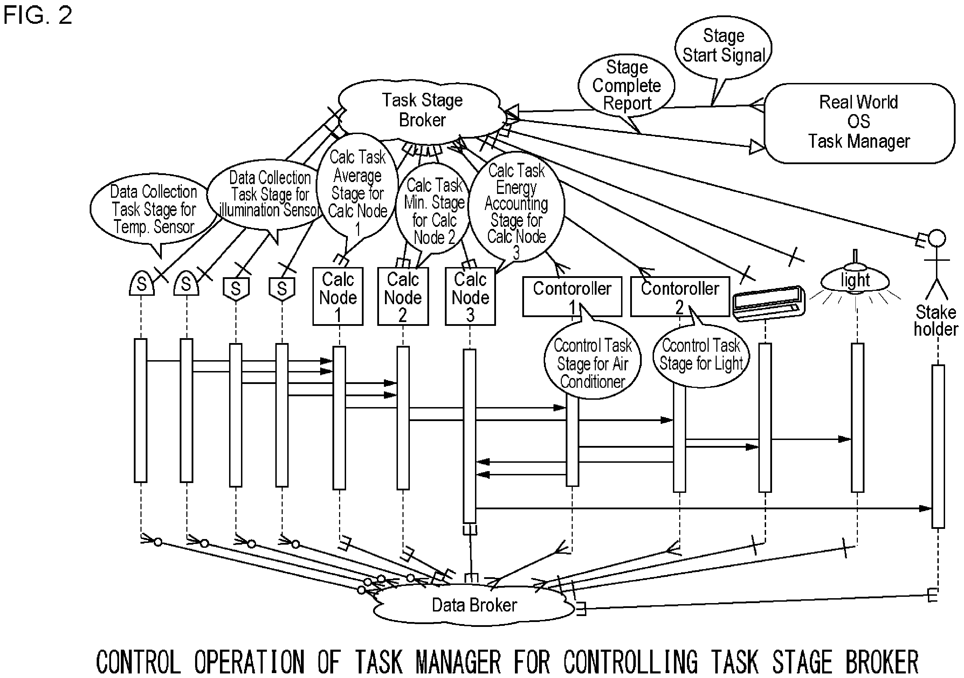

Fig. 1 shows the task stages used for the control operations in Example 1 and a resource map showing the resources assigned to the respective task stages. In Example 1, multiple sensors are assigned to a data acquisition task stage to be executed by the sensors (which are indicated by "S" in the drawing). Each resource is fixedly assigned to the corresponding task stage. Fig. 2 is a schematic diagram showing the data sharing via the broker. In Example 1, two brokers, i.e., the stage broker configured as a management broker that functions as a stage management interface between the task manager and the real-world agents, and the data broker that functions as a data flow interface between the multiple agents, respectively function as a control flow interface and a data flow interface under a PUB-SUB scheme.

Fig. 2 is a sequence diagram showing the data flow between the multiple agents. In the sequence drawing, there appears to be a temporal relation between steps as indicated by the arrows in the drawing (upstream/downstream relation). However, in practice, the data flow may include steps to be executed in parallel. For example, the data transfer to each calculation node from the corresponding sensor may be performed in a desired sequence. Also, the data transfer from the calculation node 1 to the controller 1 and the data transfer from the calculation node 2 to the controller 2 may be performed in no particular order. It should be noted that the activities shown in conventional activity diagrams look similar to those shown in Fig. 1. However, in conventional techniques, the control mechanism has not been determined.

### Example 2: Workflow and task management for interior construction.

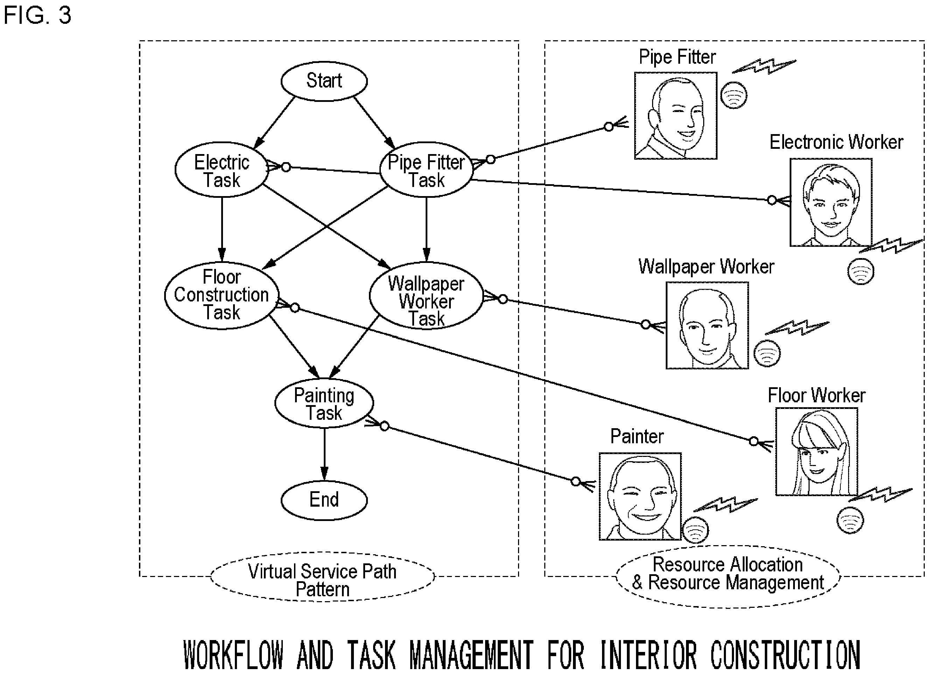

Fig. 3 shows a simple configuration of a project for interior construction in a condominium building. Description will be made below assuming that the task executing resources (real-world agents) include electricians, plumbers, flooring workers, wallpapering workers, and painters. Description will be made assuming that the project as shown in Fig. 3 is performed the same number of times as there are rooms. In this case, multiple task managers are operated in parallel such that each task manager controls the corresponding workflow shown in Fig. 3. Each agent executes the operation for the corresponding room according to an instruction received from the corresponding task manager. In practice, each agent uses an information terminal such as a PC, smartphone, tablet terminal, or the like. Each task manager transmits/receives the task stage information to/from the corresponding information terminal.

When each agent has completed the assigned task for the room, the agent inputs, to the information terminal, the data that indicates the completion of the task. The task manager advances the task stage as appropriate based on the notice of the completion of the task received from the information terminal of each agent. When an assigned task set for a different room can be executed, the agent starts the task. It should be noted that, when the agent receives a notice of the start of the task stage set for a different room from the task manager after the upstream task stage ends, the agent can execute the next task. As described above, with a signal from the task manager indicating that the next stage can be started as a trigger, such a human agent (with an information terminal) starts the next task.

The real-world operating system (which will also be referred to as the "real-world OS" hereafter) proposed by the present inventor is a mechanism for managing and executing complicated distributed cooperative interactions between real-world agents in units of workflows mainly based on the functions of the task manager. The coming IOE (Internet Of Everything) age will require a service designed in the form of a single integrated workflow so as to allow various kinds of autonomous agents that belong to distributed environments to operate in synchronization with and in cooperation with each other. The real-world OS functions as a core platform for designing, implementing, and managing various kinds of systems each associated with a great number of agents.

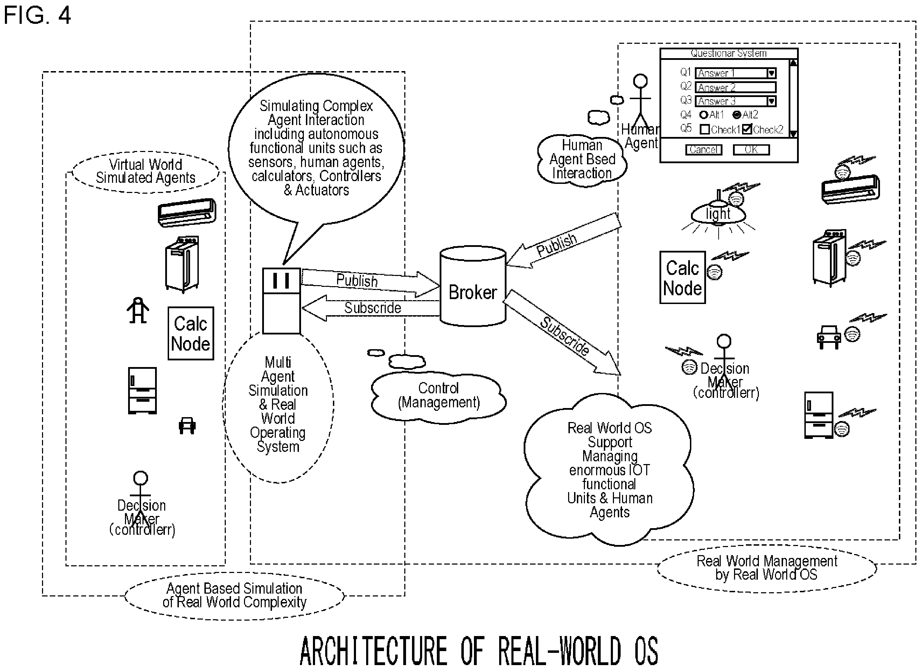

Fig. 4 shows a vision of the real-world OS. Fig. 4 is a schematic diagram showing the range of control provided by the real-world OS. The left side in the drawing shows a virtual region, and includes virtual agents provided by simulation. Moreover, the right side in the drawing shows a management region provided by real-world agents. As shown in Fig. 4, the task manager functions as a core engine for an agent-based simulation, and functions as a control engine for the real-world agents. This allows the agent-based modeling in the virtual world to be connected to the agent computing in the real world in a seamless manner. In an intermediate stage between the design by simulation and the management of the workflow provided by the real-world agents, such an arrangement allows partial replacement (partial implementation) to be performed between the workflow simulated in the virtual world and the real-world agents, thereby allowing a design method to be performed for providing various kinds of prototypes. Ultimately, such an arrangement provides an agent-based simulation in the form of a dynamic design drawing for managing the real-world agents.

As examples of services that can be provided by executing a distributed cooperative control operation for the IOT agents, the conceivable services (1) through (7) will be listed below.
(1) As a sensing and control system service, the real-world OS provides an energy sensing service supported by HEMS, BEMS, or CEMS and a device control service using the energy sensing service, and a monitoring and care service and security service employed in a house, office, or community.
(2) As a distributed search system service for data, the real-world OS provides a parallel electronic health record search service covering multiple hospitals.
(3) As a business data processing system service, the real-world OS provides autonomous distributed business data processing as shown in Figs. 1 through 3.
(4) As a safety and security or community system service, the real-world OS provides: 4-1) a disaster data acquisition and data sharing service; 4-2) a disaster electronic health record service; and 4-3) a daily community questionnaire survey, survey result sharing, and data processing service.
(5) As a sensing and statistical and accounting processing system service, the real-world OS provides an energy statistics service or an energy accounting processing service based on energy sensing supported by HEMS, BEMS, or CEMS.
(6) As a lifelog system service, the real-world OS provides various kinds of lifelog acquisition and utilization systems.
(7) As a factory system service, the real-world OS provides a factory sensor network based on a factory energy management system.

As described above, to a greater or lesser extent, various kinds of services as required in the world of daily life or industrial society can each be designed as an autonomous distributed cooperative system using IOT agents. It is important for the real-world OS to support the design, implementation, and control of the autonomous distributed cooperative system. It should be noted that, as a conceivable service, a new system development method may be provided as follows. With the new system development method, complicated interactions between IOT agents in the real world are virtually designed, and emulation tests are performed so as to replace each virtually-designed agent with a corresponding real-world agent in a stepwise manner. Ultimately, it is conceivable that the new system development method provides an autonomous distributed cooperative system by means of the real-world agents.

### [Embodiment]

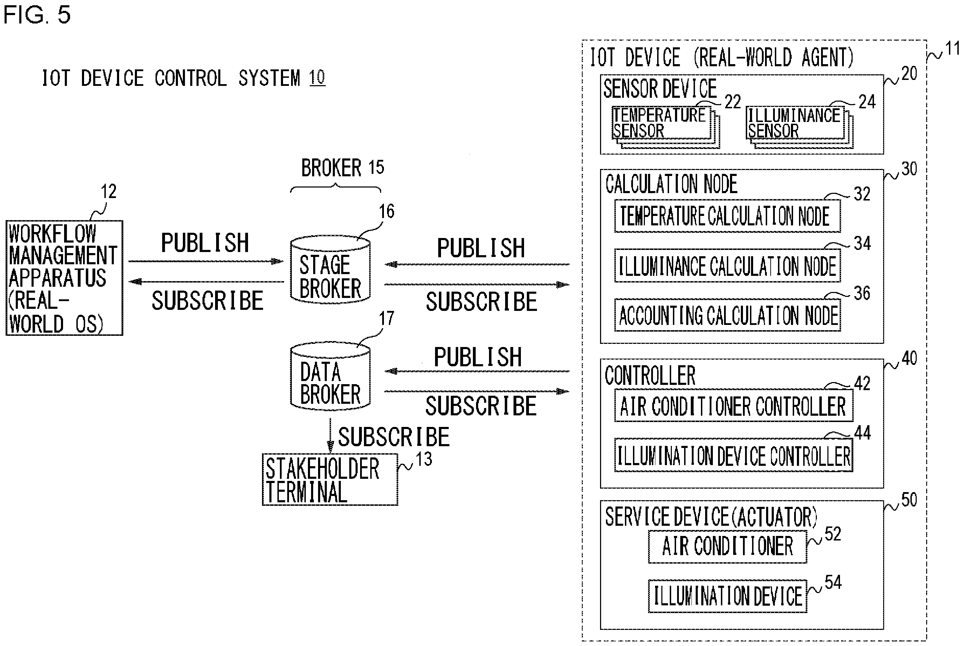

Detailed description will be made below regarding a workflow management apparatus that provides a distributed cooperative control operation described in the aforementioned outline. Fig. 5 shows an IOT device control system 10 according to an embodiment. The IOT device control system 10 is an information processing system configured as an embodiment of an autonomous distributed cooperative system. The IOT device control system 10 includes an IOT device 11, a workflow management apparatus 12, a stakeholder terminal 13, and a broker 15.

The IOT device 11 is configured as multiple kinds of agent devices prepared in the real world. Each IOT device 11 is connected via the Internet, and operates autonomously. For example, when the IOT device 11 receives a notice of a given stage from the workflow management apparatus 12 via the communication network, the IOT device 11 executes an operation that corresponds to the stage. The IOT device 11 may store a program (and may mount an MPU or the like for executing the program) for executing the operation. The IOT device 11 according to the embodiment includes a sensor device 20, a calculation node 30, a controller 40, and a service device 50.

The sensor device 20 is configured as a device including various kinds of known sensors. For example, the sensor device 20 detects a state of the surrounding environment, and outputs the information that indicates the environmental state thus detected. Furthermore, for example, when the state of the surrounding environment becomes a predetermined state, the sensor device 20 detects this event, and outputs a notice. The sensor device 20 according to the embodiment includes multiple temperature sensors 22 and multiple illuminance sensors 24. For example, the sensor device 20 may include several hundred temperature sensors installed in a factory. Also, the sensor device 20 may include several dozen illuminance sensors installed in a given room in an office building.

The calculation node 30 is configured as an information processing apparatus that executes various kinds of calculation processing. The calculation node 30 includes a temperature calculation node 32, an illuminance calculation node 34, and an accounting calculation node 36. The temperature calculation node 32 calculates an average temperature value based on the temperature data measured by the multiple temperature sensors 22. The illuminance calculation node 34 calculates the lowest illuminance based on the illuminance data measured by the multiple illuminance sensors 24. The accounting calculation node 36 executes a predetermined energy accounting calculation operation based on the setting temperature for an air conditioner and the on/off state of an illumination device. For example, the accounting calculation node 36 calculates energy consumption, energy cost, and the like, so as to execute an energy accounting operation.

The service device 50 is configured as a device that provides various kinds of services required in the world of everyday life and industrial society. The service device 50 is a so-called energy-consuming device. The service device 50 includes an air conditioner 52 and an illumination device 54. The controller 40 is configured as a control device that controls the operation of the service device 50. The controller 40 includes an air conditioner controller 42 and an illumination device controller 44. The air conditioner controller 42 controls the setting temperature for the air conditioner. The illumination device controller 44 controls the on/off operation of the illumination device.

The workflow management apparatus 12 is configured as an embodiment of the task manager and the real-world OS described in the aforementioned outline. The workflow management apparatus 12 controls the operations of the multiple IOT devices 11 according to transition of the task stage (which will simply be referred to as the "stage" hereafter) determined by the workflow. Detailed description will be made later regarding the functions of the workflow management apparatus 12. It should be noted that a physical embodiment of the workflow management apparatus 12 is not restricted in particular. For example, the workflow management apparatus 12 may be configured as a PC or a server, for example. Also, the workflow management apparatus 12 may be configured as a microcontroller or a single-board computer.

The stakeholder terminal 13 is configured as an information terminal to be operated by a predetermined stakeholder such as a responsible staff member of a company in which the IOT device 11 is installed. The stakeholder terminal 13 acquires energy accounting information obtained as a calculation result calculated by the accounting calculation node 36. The stakeholder terminal 13 displays the energy accounting information thus acquired on a display or the like as appropriate.

The broker 15 is configured as an apparatus that manages data transmission/reception between apparatuses using the PUB-SUB scheme. The broker 15 may be configured as a known message queue product or as message-oriented middleware. In Fig. 5, each apparatus communicates with the broker 15 via a communication net such as a LAN, a WAN, the Internet, or the like, using the PUB-SUB scheme according to a communication protocol determined by the broker 15, which allows data to be transmitted and received between the apparatuses.

The broker 15 includes a stage broker 16 and a data broker 17. The stage broker 16 is configured as the aforementioned management broker. The stage broker 16 manages transmission and reception of the management information between the workflow management apparatus 12 and each IOT device 11 with respect to the start and end of the stage. The data broker 17 manages data transmission and reception between the IOT devices 11 or otherwise between the IOT device 11 and the stakeholder terminal 13.

With such an arrangement, the IOT device control system 10 determines beforehand what kinds of stages are included in the workflow to be managed by the workflow management apparatus 12, and determines what kind of operation is to be performed by the agent in each stage. This information is made available to the manufacturers of the IOT devices 11. Each IOT device 11 is configured such that, when it receives a notice of a predetermined stage from the workflow management apparatus 12, it performs an operation according to the stage.

For example, the IOT device control system 10 determines and publishes beforehand that, in the temperature acquisition stage described later, a task is to be executed for acquiring the surrounding temperature. With the subscription of a notice of the temperature acquisition stage as a trigger, the temperature sensor 22 measures the surrounding temperature. Furthermore, the temperature sensor 22 is configured to publish the end of the task to the stage broker 16, and to publish the temperature data thus measured to the data broker 17. Furthermore, the IOT device control system 10 determines and publishes beforehand that, in the average temperature calculation stage described later, a task is to be executed for calculating an average temperature based on the multiple temperature data. The temperature calculation node 32 is configured such that, with the subscription of a notice of the average temperature calculation stage as a trigger, the temperature calculation node 32 calculates an average value of the temperature data measured by the multiple temperature sensors 22. Furthermore, the temperature calculation node 32 is configured to publish the end of the task to the stage broker 16, and to publish the average temperature thus calculated to the data broker 17.

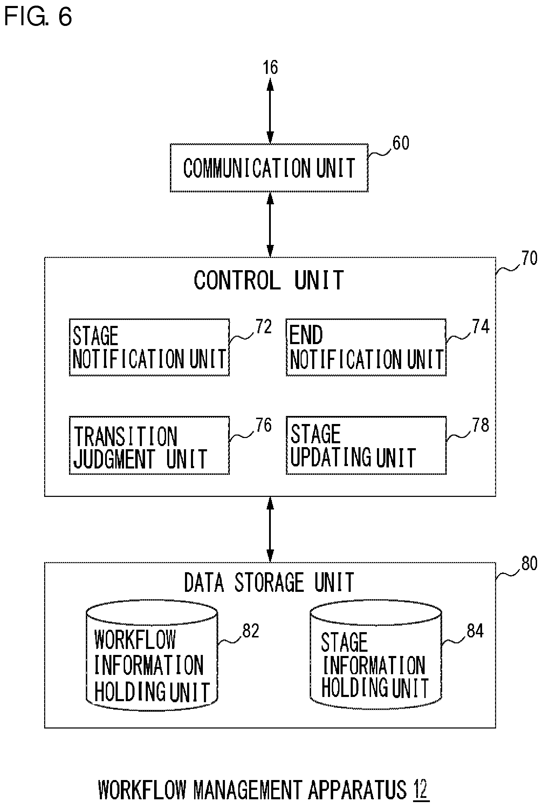

Fig. 6 is a block diagram showing a function configuration of the workflow management apparatus 12 shown in Fig. 5. The workflow management apparatus 12 includes a communication unit 60, a control unit 70, and a data storage unit 80. The communication unit 60 transmits/receives data to/from an external apparatus according to a predetermined communication protocol. For example, the communication unit 60 executes data transmission and reception between itself and the stage broker 16 according to a predetermined message protocol using the PUB-SUB scheme.

The control unit 70 controls the operation of the workflow management apparatus 12. The control unit 70 performs a workflow management operation, i.e., executes data processing for performing a distributed cooperative control operation for the multiple IOT devices 11. The data storage unit 80 is configured as a storage region that stores various kinds of data that are used and updated when the control unit 70 performs data processing.

Each block shown in the block diagram in the present specification can be configured as a hardware component, i.e., a device or an apparatus such as a CPU or memory employed in a computer. Also, each block shown can be configured as a software component such as a computer program or the like. Also, each function block may be configured by effecting coordination between a hardware component and a software component, which is shown in this drawing. That is to say, such a function block can be configured by making various kinds of combinations of a hardware component and a software component, which can be understood by those skilled in this art.

For example, the workflow management apparatus 12 may store, as an installed program, an application program including software modules that correspond to the respective function blocks of the control unit 70. With such an arrangement, a CPU of the workflow management apparatus 12 may read out each software module so as to execute the software module in memory, thereby providing a function of each function block of the control unit 70. Also, each function block of the data storage unit 80 may be configured as a storage apparatus such as a storage device, memory, or the like, that stores data.

The data storage unit 80 includes a workflow information holding unit 82 and a stage information holding unit 84. The workflow information holding unit 82 holds the upstream/downstream relation between the stages defined in the workflow and the conditions according to which each stage is to be transited to the next stage. Typical examples of such a transition condition include a transition condition such that the state is to be transited if a notice, which indicates the end of a task assigned to the stage, has been received from an agent after it has completed the task assigned beforehand to the stage.

It should be noted that, in a case in which multiple agents execute the tasks assigned to a single stage, the following transition condition may be employed, according to which the stage is to be transited to the next stage. That is to say, upon reception of task end notices from a part of the agents, such an arrangement may allow the current stage to be switched to the next stage. In other words, with such a transition condition, when the number of agents from which task end notices have been received is equal to or greater than a predetermined number, the current stage is transited to the next stage. That is to say, such a transition condition does not require task end notices to be received from all the multiple agents after they are instructed to execute their tasks.

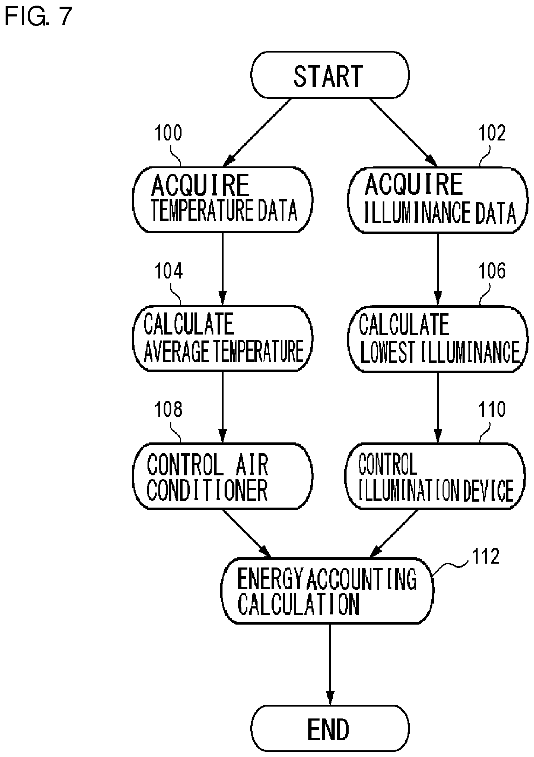

Fig. 7 shows a schematic configuration of the workflow according to the embodiment. In the workflow according to the embodiment, transition between multiple stages is defined in a form that corresponds to Example 1 (see Fig. 1, for example) described in the outline. Furthermore, in the workflow, the operations of multiple kinds of real-world agents are controlled.

As the stage upstream/downstream relation information, the workflow information holding unit 82 holds information indicating that, after the workflow starts, the stage transits to a temperature acquisition stage 100 and an illuminance acquisition stage 102. Furthermore, the workflow information holding unit 82 holds information indicating that an average temperature calculation stage 104 is configured as a stage subsequent to the temperature acquisition stage 100. Moreover, the workflow information holding unit 82 holds information indicating that an air conditioner control stage 108 is configured as a stage subsequent to the average temperature calculation stage 104. Moreover, the workflow information holding unit 82 holds information indicating that an energy accounting calculation stage 112 is configured as a stage subsequent to the air conditioner control stage 108. Moreover, the workflow information holding unit 82 holds information indicating that a lowest illuminance calculation stage 106 is configured as a stage subsequent to the illuminance acquisition stage 102. Moreover, the workflow information holding unit 82 holds information indicating that an illumination control stage 110 is configured as a stage subsequent to the lowest illuminance calculation stage 106. Moreover, the workflow information holding unit 82 holds information indicating that an energy accounting calculation stage 112 is configured as a stage subsequent to the illumination control stage 110. Moreover, the workflow information holding unit 82 holds information indicating that, upon completion of the energy accounting calculation stage 112, the workflow ends.

As a transition condition according to which the current stage is to be transited from the temperature acquisition stage 100 to the average temperature calculation stage 104, the workflow information holding unit 82 defines a transition condition such that the state is to be transited if 50 or more from a total number of 100 temperature sensors 22 have transmitted notices of the end of the temperature measurement task. Furthermore, as a transition condition according to which the current stage is to be transited from the average temperature calculation stage 104 to the air conditioner control stage 108, the workflow information holding unit 82 defines a transition condition such that the state is to be transited if the temperature calculation node 32 has transmitted a notice of the end of the average temperature calculation task. Moreover, as a transition condition according to which the current stage is to be transited from the illuminance acquisition stage 102 to the lowest illuminance calculation stage 106, the workflow information holding unit 82 defines a transition condition such that the state is to be transited if 15 or more from a total number of 20 illuminance sensors 24 have transmitted notices of the end of the illuminance measurement task. Moreover, as a transition condition according to which the current stage is to be transited from the lowest illuminance calculation stage 106 to the illumination control stage 110, the workflow information holding unit 82 defines a transition condition such that the state is to be transited if the illuminance calculation node 34 has transmitted a notice of the end of the lowest illuminance calculation task.

Returning to Fig. 6, the stage information holding unit 84 holds stage information that indicates the current stage in the workflow. When the current stage transits to a new, different stage in the workflow, the identification information (name, ID, or the like) for the new stage is recorded in the stage information.

The stage information allows multiple stages to be recorded as the current stage at the same time. In an example shown in Fig. 7, a sequence of the temperature acquisition stage 100, the average temperature calculation stage 104, and the air conditioner control stage 108, and a sequence of the illuminance acquisition stage 102, the lowest illuminance calculation stage 106, and the illumination control stage 110, are executed in parallel. Accordingly, the stage information holding unit 84 is capable of holding stage information indicating that the current stage is set to both the temperature acquisition stage 100, and any one of the illuminance acquisition stage 102, the lowest illuminance calculation stage 106, and the illumination control stage 110. Also, the stage information holding unit 84 is capable of holding the stage information indicating that the current stage is set to both the illuminance acquisition stage 102, and any one of the temperature acquisition stage 100, the average temperature calculation stage 104, and the air conditioner control stage 108.

The control unit 70 includes a stage notification unit 72, an end notice reception unit 74, a transition judgement unit 76, and a stage updating unit 78. The stage notification unit 72 monitors the stage information held by the stage information holding unit 84. When the stage information is updated, the stage notification unit 72 transmits information that indicates the current stage (which will be referred to as the "current stage information" hereafter) to the stage broker 16. This allows one or more IOT devices 11 to be notified of the current stage, thereby allowing such one or more IOT devices 11 to each execute an operation at the same time according to the current stage.

The current stage information transmitted by the stage notification unit 72 includes information configured as current stage identification information (e.g., stage name or stage ID). For example, the current stage information is configured as a message with an appended topic indicating the current stage identification information. However, the current stage information includes no instruction for any IOT device 11 to perform a particular operation. For example, the current stage information includes no command directly defining a particular operation of each IOT device 11. Also, the current stage information includes neither a parameter to be used as a reference in each IOT device 11 in its operation, nor a parameter indirectly defining a particular operation of each IOT device 11. As described above, the workflow management apparatus 12 notifies each IOT device 11 of the current stage. Furthermore, the workflow management apparatus 12 allows each IOT device 11 to autonomously operate its particular operation based on its own design according to the current stage. Thus, the IOT device control system 10 provides high independence of the IOT devices 11, thereby providing high security.

After each IOT device 11 transmits an operation end notice, the end notice reception unit 74 receives the operation end notice from the stage broker 16. The operation end notice is configured as information indicating that the operation that corresponds to the current stage in the workflow has ended, i.e., the information indicating that the task defined to be executed in the current stage has ended. That is to say, the operation end notice can also be referred to as the "task end notice". The operation end notice may include identification information with respect to the stage in which the operation ends on the IOT device 11 side. It should be noted that the operation end notice include no data obtained as a result of the task operation of the IOT device 11, such as the temperature data or the average temperature data. Such data is transmitted and received among the IOT devices 11 via the data broker 17. This allows the workflow management apparatus 12 to be dedicated to judging the start, end, or transition of a stage.

The transition judgment unit 76 judges, based on the reception of the operation end notice obtained by the end notice reception unit 74, whether or not a transition condition held by the workflow information holding unit 82 has been fulfilled for judging whether or not the current stage is to be transited to the next stage in the workflow. When the transition judgment unit 76 detects that the transition condition has been fulfilled, the transition judgment unit 76 notifies the stage updating unit 78 of a combination of the stage to be transited and the stage to be set after the transition.

For example, as a transition condition according to which the temperature acquisition stage 100 is transited to the average temperature calculation stage 104, a condition may be set such that the state is to be transited if half of a total number of 100 temperature sensors 22 have transmitted the temperature measurement task end notices. In this case, when the number of operation end notices each indicating that the operation for the temperature acquisition stage 100 has ended becomes 50 or more, the transition judgment unit 76 may judge that the aforementioned transition condition has been fulfilled. Similarly, as a transition condition according to which the current stage is switched from the illuminance acquisition stage 102 to the lowest illuminance calculation stage 106, a condition may be determined such that the state is to be transited if 15 or more of a total number of 20 illuminance sensors 24 have transmitted the notices of the end of the illuminance measurement task. In this case, when the number of received operation end notices each indicating that the operation for the illuminance acquisition stage 102 has ended becomes 15 or more, the transition judgment unit 76 may judge that the aforementioned transition condition has been fulfilled.

When the transition judgement unit 76 has judged that the transition condition set for the current stage has been fulfilled, the stage updating unit 78 updates the stage information held by the stage information holding unit 84 so as to advance the current stage to the next stage. Specifically, when the transition judgment unit 76 has transmitted a notice of a combination of the stage to be transited and the stage to be set after the transition, the stage updating unit 78 updates the stage information such that the stage to be transited recorded in the stage information is switched to the stage to be set after the transition.

In a case in which multiple stages are recorded as the current stages in the stage information, the stage updating unit 78 updates the stage information such that the stage to be transited is selected from among the multiple current stages according to a notice received from the transition judgment unit 76, and such that the stage to be transited thus selected is switched to the stage to be set after the transition. The data of the other stages, i.e., the stages which are not selected as the stage to be transited, is not rewritten in the stage information. That is to say, the other stages are each maintained as the current stage.

For example, when the temperature acquisition stage 100 and the illuminance acquisition stage 102 are each set to the current stage, and when only the transition condition for the temperature acquisition stage 100 has been fulfilled, the stage updating unit 78 updates the stage information such that the average temperature calculation stage 104 and the illuminance acquisition stage 102 are each set to the current stage. Subsequently, when only the transition condition for the average temperature calculation stage 104 has been fulfilled, the stage updating unit 78 updates the stage information such that the air conditioner control stage 108 and the illuminance acquisition stage 102 are each set to the current stage. As described above, in a case in which the workflow is defined such that the multiple stages are advanced in parallel, the control operation for the IOT device 11 and the stage switching operation to the next stage are executed independently for every stage arranged in parallel.

Description will be made below regarding the operation of the IOT device control system 10 having the aforementioned configuration.

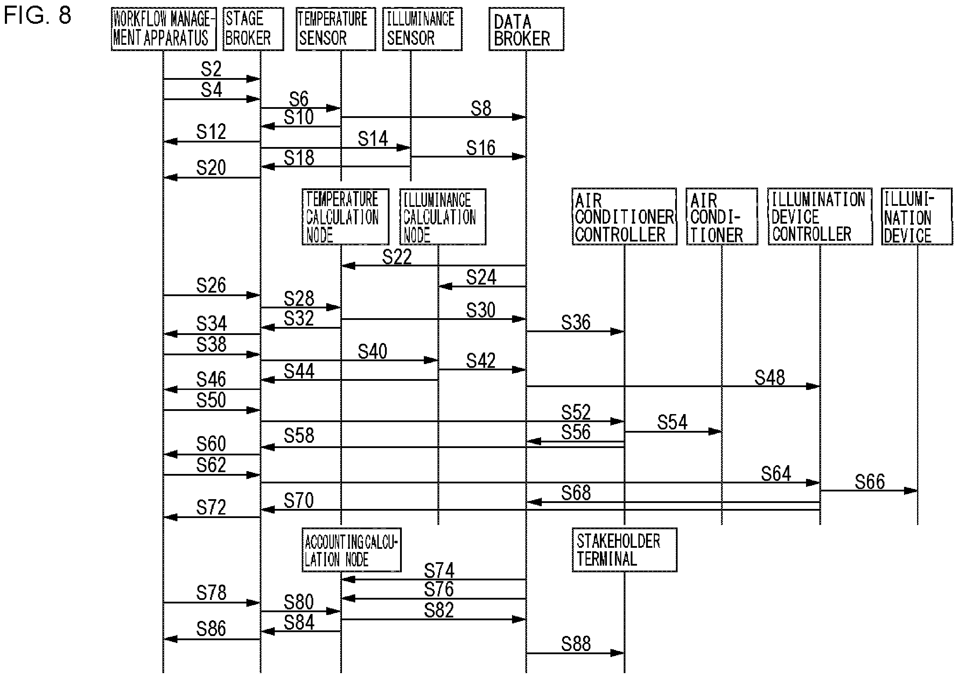

Fig. 8 is a sequence diagram showing the operation of the IOT device control system 10. Fig. 8 shows the control operation of the workflow management apparatus 12 for controlling the IOT device 11 according to the workflow shown in Fig. 7. Also, the operation shown in Fig. 8 corresponds to Example 1 (see Fig. 2, for example) described in the outline. In the sequence drawing, there appears to be an upstream/downstream relation between the operations for the stages arranged in parallel (e.g., the illuminance acquisition stage 102, the average temperature calculation stage 104, etc.). In reality, the operations for the stages arranged in parallel are performed in a certain order. However, such operations are substantially executed at the same time in parallel.

Before the operations, each topic name defined beforehand for a predetermined stage in which the corresponding IOT device 11 is to be operated is registered in the stage broker 16 and the data broker 17. This allows each IOT device 11 to operate as a subscriber that receives a message indicating the start of the aforementioned predetermined stage or a message including data required to execute the task. Furthermore, each IOT device 11 is designed to perform an operation that corresponds to the aforementioned predetermined stage. For example, with the temperature sensor 22, a predetermined topic name indicating the start of the temperature acquisition stage is registered in the stage broker 16. Furthermore, the temperature sensor 22 stores a program designed to execute the temperature measurement operation in the temperature acquisition stage.

The workflow management apparatus 12 starts the workflow shown in Fig. 7 in a cyclic manner or otherwise according to an instruction received from a user. The stage updating unit 78 of the workflow management apparatus 12 updates the stage information such that the temperature acquisition stage 100 and the illuminance acquisition stage 102 are each set to the current stage. The stage notification unit 72 publishes, to the stage broker 16, the current stage information with an appended topic indicating the temperature acquisition stage (S2). In addition, the stage notification unit 72 publishes, to the stage broker 16, the current stage information with an appended topic indicating the illuminance acquisition stage (S4).

Each of the multiple temperature sensors 22 subscribes, from the stage broker 16, the current stage information with the appended topic indicating the temperature acquisition stage (S6), and measures the surrounding temperature. Subsequently, each temperature sensor 22 publishes, to the data broker 17, a message including a message body indicating the temperature data and an appended topic indicating the temperature measurement result (S8). Each temperature sensor 22 publishes, to the stage broker 16, an operation end notice indicating the end of the temperature acquisition stage (S10). The end notice reception unit 74 of the workflow management apparatus 12 subscribes, from the stage broker 16, an operation end notice from each temperature sensor 22 (S12).

As another operation performed in parallel, each of the multiple illuminance sensors 24 subscribes, from the stage broker 16, the current stage information with an appended topic indicating the illuminance acquisition stage (S14), and measures the surrounding illuminance. Subsequently, each illuminance sensor 24 publishes, to the data broker 17, a message including a message body indicating the illuminance data and an appended topic indicating the illuminance measurement result (S16). Each illuminance sensor 24 publishes, to the stage broker 16, an operation end notice for the illuminance acquisition stage (S18). The end notice reception unit 74 of the workflow management apparatus 12 subscribes, from the stage broker 16, the end operation notice received from each illuminance sensor 24 (S20).

The transition judgment unit 76 of the workflow management apparatus 12 judges whether or not a transition condition for the temperature acquisition stage 100 to be switched to the average temperature calculation stage 104 has been fulfilled, based on the reception state of the operation end notices received in the temperature acquisition stage. For example, when a predetermined number of temperature sensors 22, i.e., 50, from a total number of several hundred have published the operation end notices, i.e., when the number of subscribed operation end notices becomes 50, the transition judgment unit 76 judges that the transition condition has been fulfilled. The stage updating unit 78 updates the stage information such that the current stage is switched from the temperature acquisition stage 100 to the average temperature calculation stage 104. As another operation performed in parallel, the transition judgment unit 76 judges whether or not a transition condition for the illuminance acquisition stage 102 to be switched to the lowest illuminance calculation stage 106 has been fulfilled, based on the reception state of the operation end notices with respect to the illuminance acquisition stage. For example, when a predetermined number, as defined in the transition condition, of illuminance sensors 24 from a total number of several dozen have published the operation end notices, i.e., when the number of subscribed operation end notices becomes the predetermined number, the transition judgment unit 76 judges that the transition condition has been fulfilled. The stage updating unit 78 updates the stage information such that the current stage is switched from the illuminance acquisition stage 102 to the lowest illuminance calculation stage 106.

As described above, the workflow according to the embodiment allows the operation sequence (i.e., the upstream/downstream relation) among the multiple stages to be designed to have a partially ordered relation. For example, the temperature acquisition stage 100 and the illuminance acquisition stage 102 have a partially ordered relation. That is to say, there is no single pattern determined for the operation sequences among the stages, and the execution sequences are incomparable among the stage sequences. In other words, the first stage to be started is not restricted in particular. Also, the first stage to be ended is not restricted in particular. Also, the average temperature calculation stage 104 configured as a stage subsequent to the temperature acquisition stage 100 and the illuminance acquisition stage 102 have a partially ordered relation. That is to say, there is no single pattern determined for the operation sequences among the stages, and the execution sequences are incomparable among the stage sequences. As described above, such an operation order relation among the stages is held by the workflow information holding unit 82.

The stage updating unit 78 refers to the operation sequence held by the workflow information holding unit 82. When the transition condition for the temperature acquisition stage 100 to be switched to the average temperature calculation stage 104 has been fulfilled, and when the transition condition for the illuminance acquisition stage 102 to be switched to the lowest illuminance calculation stage 106 has not been fulfilled, the stage updating unit 78 updates the stage information such that the average temperature calculation stage 104 and the illuminance acquisition stage 102 are each set to the current stage in the workflow. That is to say, the stage updating unit 78 independently executes the stage transition on the side including the temperature acquisition stage 100 and the average temperature calculation stage 104 and the stage transition on the side including the illuminance acquisition stage 102 and the lowest illuminance calculation stage 106.

The temperature calculation node 32 subscribes, from the data broker 17, multiple temperature data each having an appended topic indicating the temperature measurement result (S22). The illuminance calculation node 34 subscribes, from the data broker 17, multiple illuminance data each having an appended topic indicating the illuminance measurement result (S24).

The stage notification unit 72 of the workflow management apparatus 12 publishes, to the stage broker 16, the current stage information having an appended topic indicating the average temperature calculation stage (S26). The temperature calculation node 32 subscribes the current stage information from the stage broker 16 (S28). The temperature calculation node 32 calculates an average temperature based on the temperature data measured by the multiple temperature sensors 22. Subsequently, the temperature calculation node 32 publishes, to the data broker 17, a message including a message body indicating the average temperature data and an appended topic indicating the average temperature calculation result (S30). The temperature calculation node 32 publishes, to the stage broker 16, an operation end notice for the average temperature calculation stage (S32). The end notice reception unit 74 of the workflow management apparatus 12 subscribes the operation end notice from the stage broker 16 (S34). The air conditioner controller 42 subscribes, from the data broker 17, the average temperature data having an appended topic indicating the average temperature calculation result (S36).

As another operation performed in parallel, the stage notification unit 72 of the workflow management apparatus 12 publishes, to the stage broker 16, the current stage information having an appended topic indicating the lowest illuminance calculation stage (S38). The illuminance calculation node 34 subscribes the current stage information from the stage broker 16 (S40). The illuminance calculation node 34 calculates the lowest illuminance based on the illuminance data measured by the multiple illuminance sensors 24. Subsequently, the illuminance calculation node 34 publishes, to the data broker 17, a message including a message body indicating the lowest illuminance data and an appended topic indicating the lowest illuminance calculation result (S42). The illuminance calculation node 34 publishes an operation end notice for the lowest illuminance calculation stage to the stage broker 16 (S44). The end notice reception unit 74 of the workflow management apparatus 12 subscribes the operation end notice from the stage broker 16 (S46). The illumination device controller 44 subscribes, from the data broker 17, the lowest illuminance data having an appended indicating the lowest illuminance calculation result (S48).

The transition judgment unit 76 of the workflow management apparatus 12 judges whether or not the transition condition for the average temperature stage 104 to be switched to the air conditioner control stage 108 has been fulfilled, based on the reception state of an operation end notice with respect to the average temperature calculation stage. The stage updating unit 78 updates the stage information such that the current stage is switched from the average temperature calculation stage 104 to the air conditioner control stage 108. As another operation performed in parallel, the transition judgment unit 76 judges whether or not the transition condition for the lowest illuminance calculation stage 106 to be switched to the illumination control stage 110 has been fulfilled, based on the reception state of an operation end notice with respect to the lowest illuminance calculation stage. The stage updating unit 78 updates the stage information such that the current stage is switched from the lowest illuminance calculation stage 106 to the illumination control stage 110.

The stage notification unit 72 of the workflow management apparatus 12 publishes, to the stage broker 16, the current stage information having an appended topic indicating the air conditioner control stage (S50). The air conditioner controller 42 subscribes the current stage information from the stage broker 16 (S52). The air conditioner controller 42 determines a new setting temperature for an air conditioner 52 based on the average temperature calculated by the temperature calculation node 32, so as to control the air conditioner 52 such that it operates with this setting temperature (S54). In this example, the air conditioner controller 42 is directly connected to the air conditioner 52. Also, the air conditioner controller 42 may be indirectly connected to the air conditioner 52 via the data broker 17.

The air conditioner controller 42 publishes, to the data broker 17, a message including a message body indicating a new setting temperature and an appended topic indicating the air conditioner control result (S56). Furthermore, the air conditioner controller 42 publishes, to the stage broker 16, an operation end notice with respect to the air conditioner control stage (S58). The end notice reception unit 74 of the workflow management apparatus 12 subscribes the operation end notice from the stage broker 16 (S60).

As another operation performed in parallel, the stage notification unit 72 of the workflow management apparatus 12 publishes, to the stage broker 16, the current stage information having an appended topic indicating the illumination control stage (S62). The illumination device controller 44 subscribes the current stage information from the stage broker 16 (S64). The illumination device controller 44 determines the on/off state of the illumination device 54 based on the lowest illuminance calculated by the illuminance calculation node 34, so as to turn on or otherwise turn off the illumination device 54 (S66). In this example, the illumination device controller 44 is directly connected to the illumination device 54. Also, the illumination device controller 44 may be indirectly connected to the illumination device 54 via the data broker 17.

The illumination device controller 44 publishes, to the data broker 17, a message including a message body indicating the on/off state of the illumination device 54 and an appended topic indicating the illumination control result (S68). Furthermore, the illumination device controller 44 publishes the operation end notice with respect to the illumination control stage to the stage broker 16 (S70). The end notice reception unit 74 of the workflow management apparatus 12 subscribes the operation end notice from the stage broker 16 (S72).

The accounting calculation node 36 subscribes, from the data broker 17, the setting temperature data having an appended topic indicating the air conditioner control result (S74). As another operation performed in parallel, the accounting calculation node 36 subscribes, from the data broker 17, the illumination on/off information having an appended topic indicating the illumination control result (S76).

The transition judgment unit 76 of the workflow management apparatus 12 judges whether or not the transition condition for the air conditioner control stage 108 to be switched to the energy accounting calculation stage 112 has been fulfilled, based on the reception state of the operation end notice with respect to the air conditioner control stage. Furthermore, the transition judgment unit 76 judges whether or not the transition condition for the illumination control stage 110 to be switched to the energy accounting calculation stage 112 has been fulfilled, based on the reception state of the operation end notice with respect to the illumination control stage. When the transition condition for the air conditioner control stage 108 to be switched to the energy accounting calculation stage 112 has been fulfilled, and when the transition condition for the illumination control stage 110 to be switched to the energy accounting calculation stage 112 has been fulfilled, the stage updating unit 78 updates the stage information so as to switch the current stage from the air conditioner control stage 108 and the illumination control stage 110 to the energy accounting calculation stage 112.

As described above, the workflow according to the embodiment allows the multiple stages to be executed in a partially ordered relation. For example, the air conditioner control stage 108 and the illumination control stage 110 are executed in a partially ordered relation. That is to say, there is no single pattern determined for the execution sequences among the stages, and the execution sequences are incomparable among the stage sequences. In other words, the first stage to be started is not restricted in particular. Also, the first stage to be ended is not restricted in particular. When the air conditioner control stage 108 and the illumination control stage 110 both have ended, such an arrangement allows the energy accounting calculation stage 112 to be executed. As described above, the workflow information holding unit 82 holds the sequence relation between the stages.

The stage updating unit 78 refers to the sequence relation held by the workflow information holding unit 82. When the transition condition for the air conditioner control stage 108 to be switched to the energy accounting calculation stage 112 has been fulfilled, and when the transition condition for the illumination control stage 110 to be switched to the energy accounting calculation stage 112 has not been fulfilled, the stage updating unit 78 updates the stage information such that it indicates that the air conditioner stage 108 has ended, and that the illumination control stage 110 is set to the current stage. Subsequently, when the transition condition for the illumination control stage 110 to be switched to the energy accounting calculation stage 112 has been fulfilled, the stage updating unit 78 updates the stage information again such that the current stage is switched to the energy accounting calculation stage 112. This switches the workflow to the energy accounting calculation stage 112.

The stage notification unit 72 of the workflow management apparatus 12 publishes, to the stage broker 16, the current stage information having an appended topic indicating the energy accounting calculation stage (S78). The accounting calculation node 36 subscribes the current stage information from the stage broker 16 (S80). The accounting calculation node 36 executes the energy accounting calculation operation based on the setting temperature for the air conditioner 52 determined by the air conditioner controller 42 and the on/off state of the illumination device 54 determined by the illumination device controller 44. The accounting calculation node 36 publishes, to the data broker 17, a message including a message body indicating the energy accounting data and an appended topic indicating the energy accounting calculation result (S82). Furthermore, the accounting calculation node 36 publishes the operation end notice with respect to the energy accounting calculation stage to the stage broker 16 (S84).

The end notice reception unit 74 of the workflow management apparatus 12 subscribes the operation end notice with respect to the energy accounting calculation stage from the stage broker 16 (S86). When the transition judgment unit 76 judges that the transition condition for the energy accounting calculation stage 112 to be switched to the end stage has been fulfilled, an operation that corresponds to one cycle of the workflow shown in Fig. 7 ends. It should be noted that the workflow management apparatus 12 may repeatedly perform the operation of the workflow shown in Fig. 7 every time a predetermined time period (10 minutes, etc.) elapses. That is to say, the operation shown in Fig. 8 may be repeated in a cyclic manner.

The stakeholder terminal 13 subscribes, from the data broker 17, the energy accounting data having an appended topic indicating the energy accounting calculation result (S88), and stores the data thus subscribed in a predetermined storage apparatus. The stakeholder terminal 13 may store the energy accounting data which is periodically received as a notice from the accounting calculation node 36. In this case, the energy accounting data thus notified over multiple spans of time may be subjected to data processing for every day or for every month. Also, the processing results thus obtained may be stored in a predetermined storage apparatus. Also, the processing results thus obtained may be output via a display or a printer apparatus.

The workflow management apparatus 12 according to the embodiment assigns the tasks of the multiple stages designed in parallel to the multiple agents in a parallel manner, so as to allow the agents to execute the respective tasks in a parallel manner. Furthermore, the workflow management apparatus 12 judges whether or not each of the stages designed in parallel is to be advanced to the next stage, based on the reception state of the task end notices independently transmitted by the agents each assigned to the corresponding task. This provides a high-efficiency service that allows the agents to operate in cooperation with each other even if the number of agents to be controlled becomes large. That is to say, by allowing the processing sequence for the multiple tasks, which are to be executed for providing a single service, to be defined in the form of a partially ordered sequence, such an arrangement performs a control operation so as to allow a great number of agents to perform their task operations with high efficiency, thereby providing a high-efficiency service.

Examples of such a stage transition condition include: a condition in which, in a case in which multiple agents are assigned to a given task in this stage, when the task end notices are received from a predetermined number of agents from among the multiple agents thus assigned, judgment is made that the current stage is to be switched to the next stage. In this case, such a judgment is made regardless of whether or not the task end notice has been received from a particular agent. That is to say, when the number of task end notices thus received reaches a predetermined number, this becomes a trigger to perform the stage transition. Such an arrangement does not require a great number of operations to be defined, examples of which include an operation to be performed when the task end notice transmission source is the agent A, an operation to be performed when the task end notice transmission source is the agent B, and the like. That is to say, such an arrangement provides a high-efficiency service obtained by operating the agents in cooperation with each other even if the number of the agents to be controlled becomes large.

Furthermore, in the IOT device control system 10 according to the embodiment, the stage broker 16 for managing the data flow between the workflow management apparatus 12 and the IOT devices 11 and the data broker 17 for managing the data flow between the IOT devices 11 are respectively configured as separate brokers. This allows each of such brokers to be provided with various kinds of settings such as the performance level, security level, etc., optimized according to the data characteristics to be relayed. This effectively raises the performance and security of the overall operation of the system. For example, the stage broker 16 preferably has a security level which is prioritized more highly than performance. On the other hand, the data broker 17 may be configured to have settings according to the data quantity to be managed, or according to the data size of the data to be managed. Also, multiple data brokers 17 may be arranged according to the data characteristics to be managed.

Description has been made above regarding the present invention with reference to the embodiment. The above-described embodiment has been described for exemplary purposes only, and is by no means intended to be interpreted restrictively. Rather, it can be readily conceived by those skilled in this art that various modifications may be made by making various combinations of the aforementioned components or processes, which are also encompassed in the technical scope of the present invention.

Description will be made regarding a first modification. Description has been made in the aforementioned embodiment regarding an arrangement in which the IOT devices 11 are each configured as an agent to be controlled by the workflow management apparatus 12. Also, such an agent may be a person as described in Example 2 in the outline. In this case, the workflow management apparatus 12 may transmit a notice of the current stage to an information terminal possessed by the person. The information terminal may instruct a display to display the content of the task that corresponds to the stage indicated by the notice. When the person (i.e., task operator) completes the task, the task operator may input the task end information to the information terminal. Subsequently, the information terminal may transmit a task end notice to the workflow management apparatus 12. The workflow management apparatus 12 may advance the stage according to the task end notice.

As a second modification, additional description will be made regarding the task transition predicate including the stage transition condition. The workflow information holding unit 82 holds the task transition predicate defined for each stage. The stage updating unit 78 determines the transition state to be set for each stage according to the task transition predicate. With the task transition predicate, such an arrangement allows various kinds of AND conditions, OR conditions, and NOT conditions each used for the stage transition to be defined.

The task transition predicate set for a given stage may define a stage transition such that, when a transition condition has been fulfilled, the current stage is switched to the next stage, and may also define another stage transition such that, when the transition condition for the current stage to be switched to the next stage has not been fulfilled (e.g., when a timer detects a timeout event) after a notice of the current stage information has been transmitted to an external agent (or otherwise after the previous stage has been switched to the current stage), an alternative and exceptional stage transition is executed. Examples of such a case in which the transition condition for the stage to be switched the next stage has not been fulfilled in a predetermined time period include a case in which a predetermined waiting time for waiting for a task end notice from the IOT device 11 has elapsed. Also, the task transition predicate may define that, when a task end notice indicating an abnormal operation is returned from the IOT device 11 after it executes the task, an alternative and exceptional stage transition is executed.

When the transition condition has not been fulfilled in a predetermined time period, or otherwise when a task end notice indicating an abnormal operation is returned, the stage updating unit 78 may execute an alternative and exceptional stage transition. As such an alternative and exceptional stage transition, the current stage may be switched to a predetermined stage in the same workflow or otherwise in a workflow that differs from the aforementioned workflow. For example, in a case in which the workflow management apparatus 12 executes the control operations for external devices according to multiple workflows, when an exceptional event or an error is detected, the current stage may be defined such that it transits to a predetermined stage in a common workflow for exceptional operations regardless of the workflow in which such an exceptional event or an error is detected. The present embodiment provides various kinds of stage transitions according to the workflows. Furthermore, such an arrangement supports various kinds of error handling operations and exceptional operations required in the control operations for external devices according to the workflows.

Description will be made regarding a third modification. Each IOT device 11, which is to be controlled by the workflow management apparatus 12, may have multiple functions for supporting multiple task stages, and may include multiple APIs for calling the multiple functions, which has not been described in the aforementioned embodiment. For example, the multiple APIs may include an interface A configured such that, when a stage A start notice has been transmitted from the workflow management apparatus 12, the interface A is called, and an interface B configured such that, when a stage B start notice has been transmitted from the workflow management apparatus 12, the interface B is called. This allows each IOT device 11 physically configured as a single device to execute multiple kinds of functions (i.e., tasks).

For example, in a case in which a given IOT device 11 is configured as a multi-sensor device that is capable of detecting multiple kinds of environment information, by transmitting a notice of the temperature acquisition stage 100 to the IOT device 11, such an arrangement allows the IOT device 11 to function as the temperature sensor 22. By transmitting a notice of the illuminance acquisition stage 102 to the IOT device 11, such an arrangement allows the IOT device 11 to function as the illuminance sensor 24. Also, for example, in a case in which a given IOT device 11 is configured as a controller for integrally controlling multiple devices, by transmitting a notice of the air conditioner control stage 108 to the IOT device 11, such an arrangement allows the IOT device 11 to function as the air conditioner controller 42. By transmitting a notice of the illumination control stage 110 to the IOT device 11, such an arrangement allows the IOT device 11 to function as the illumination device controller 44.

It should be noted that a given IOT device 11 may receive notices of stages from the multiple workflows operated by a single workflow management apparatus 12 or otherwise operated by multiple workflow management apparatuses 12. Also, the IOT device 11 may execute tasks that correspond to the stages indicated by the notices received from the multiple workflows. That is to say, such an arrangement allows the multiple workflows to use the service supported by such a single IOT device 11.

Also, the IOT device 11 may handle a task in units of combinations of the workflow and the stage. In other words, a correspondence relation may be held between the task to be executed and a combination of the workflow and the stage. In this case, the workflow management apparatus 12 may transmit, as the current stage information to the IOT device 11, a combination of the workflow identification information and the stage identification information. Also, when the IOT device 11 is called by a different workflow, the IOT device 11 may execute a different task even if the received notice indicates the same stage name. Also, when the IOT device 11 is called by a different workflow, the IOT device 11 may execute the same task even if the received notice indicates a different stage name.

Description will be made regarding a fourth modification. In the aforementioned embodiment, by employing the message technique using the brokers, such an arrangement provides the data flow between the workflow management apparatus 12 and each IOT device 11 and the data flow between the IOT devices 11. Also, other techniques may be employed in order to provide data transmission and reception. For example, known communication techniques such as unicast communication, multicast communication, or P2P communication may be employed so as to provide data transmission/reception between a data transmission apparatus and a data reception apparatus. Also, known data sharing techniques may be employed. Also, a given apparatus may upload data to a cloud system, and a different apparatus may download the data from the cloud system, thereby providing an information notice mechanism and a data sharing mechanism.

The functions to be supported by each component described in the Claims can be provided by a corresponding component configured as a single unit or otherwise a combination of such multiple components described in the embodiment or modifications, which can be understood by those skilled in this art.

### [DESCRIPTION OF THE REFERENCE NUMERALS]

10 IOT device control system, 11 IOT device, 12 workflow management apparatus, 16 stage broker, 17 data broker, 72 stage notification unit, 74 end notice reception unit, 76 transition judgment unit, 78 stage updating unit, 82 workflow information holding unit, 84 stage information holding unit.

### [INDUSTRIAL APPLICABILITY]

The present invention is applicable to an apparatus that manages a workflow.

## Claims

1. A workflow management apparatus comprising:
a transition condition holding unit that holds a transition condition for each stage to be switched to a next stage with respect to a workflow that controls an operation of an external device over a plurality of stages;
a stage information holding unit that holds stage information indicating a current stage of the workflow;
a stage notification unit that transmits a notice of the current stage of the workflow to the external device so as to instruct the external device to execute an operation that corresponds to the current stage; and
a stage updating unit configured such that, when the current stage transition condition has been fulfilled after an end operation notice for the current stage has been received from the external device, the stage updating unit updates the stage information so as to advance the stage of the workflow,
wherein, in a case in which there is a partially ordered relation between the stages of the workflow, in a case in which a first stage and a second stage are incomparable, in a case in which a third stage can be executed as a next stage of the first stage, and in a case in which the third stage and the second stage are incomparable, when a transition condition for the first stage has been fulfilled and a transition condition for the second stage has not been fulfilled, the stage updating unit updates the stage information so as to indicate that both the second stage and the third stage to be executed as a next stage of the first stage are set for the workflow.

2. The workflow management apparatus according to Claim 1, wherein the stage notification unit transmits information that allows the current stage of the workflow to be identified, and that does not include a content indicating an operation manner of the external device, to the external device.

3. The workflow management apparatus according to Claim 2, wherein the workflow is configured to control operations of a plurality of external devices,
wherein the plurality of external devices transmit and receive data, which is used by the external devices, among each other via a first broker,
wherein the stage notification unit transmits, to the plurality of external devices via a second broker that differs from the first broker, information that allows the current stage of the workflow to be identified,
and wherein the stage updating unit receives operation end notices from the plurality of external devices via the second broker.

4. The workflow management apparatus according to any one of Claims 1 through 3, wherein the stage notification unit notifies a plurality of external devices of the current stage of the workflow,
and wherein at least one of the transition conditions for the plurality of stages is defined such that, when operation end notices are received from a predetermined number of external devices, the current stage is switched to a next stage even if the operation end notices are not received from all of the plurality of external devices.

5. A workflow management apparatus comprising:
a transition condition holding unit that holds a transition condition for each stage to be switched to a next stage with respect to a workflow that controls an operation of an external device over a plurality of stages;
a stage information holding unit that holds stage information indicating a current stage of the workflow;
a stage notification unit that transmits a notice of the current stage of the workflow to the external device so as to instruct the external device to execute an operation that corresponds to the current stage; and
a stage updating unit configured such that, when the current stage transition condition has been fulfilled after an end operation notice for the current stage has been received from the external device, the stage updating unit updates the stage information so as to advance the stage of the workflow,
wherein, in a case in which there is a partially ordered relation between the stages of the workflow, in a case in which a first stage and a second stage are incomparable, and in a case in which a third stage can be executed as a next stage of the first stage and the second stage, when a transition condition for the first stage has been fulfilled and a transition condition for the second stage has not been fulfilled, the stage updating unit updates the stage information such that the second stage is set for the workflow in a state in which the first stage ends,
and wherein, in a case in which there is a partially ordered relation between the stages of the workflow, in a case in which a first stage and a second stage are incomparable, and in a case in which a third stage can be executed as a next stage of the first stage and the second stage, when the transition condition for the second stage has been fulfilled, the stage updating unit switches the workflow to the third stage.

6. A workflow management method wherein,
with a workflow that controls an operation of an external device over a plurality of stages, a computer executes:
transmitting a notice of a current stage of the workflow to the external device based on stage information stored in a predetermined storage region and indicating the current stage of the workflow, so as to instruct the external device to execute an operation that corresponds to the current stage; and
updating the stage information so as to advance the stage of the workflow when a predetermined transition condition has been fulfilled for the current stage to be switched to a next stage after a notice of completion of an operation for the current stage has been received from the external device,
wherein, in a case in which there is a partially ordered relation between the stages of the workflow, in a case in which a first stage and a second stage are incomparable, in a case in which a third stage can be executed as a next stage of the first stage, and in a case in which the third stage and the second stage are incomparable, when a transition condition for the first stage has been fulfilled and a transition condition for the second stage has not been fulfilled, in the updating, the stage information is updated so as to indicate that both the second stage and the third stage to be executed as a next stage of the first stage are set for the workf low.

7. A workflow management program wherein, with a workflow that controls an operation of an external device over a plurality of stages, the workflow management program instructs a computer to execute:
a function of transmitting a notice of a current stage of the workflow to the external device so as to instruct the external device to execute an operation that corresponds to the current stage; and
a function of updating the stage information so as to advance the stage of the workflow when a predetermined transition condition has been fulfilled for the current stage to be switched to a next stage after a notice of completion of an operation for the current stage has been received from the external device,
wherein, in a case in which there is a partially ordered relation between the stages of the workflow, in a case in which a first stage and a second stage are incomparable, in a case in which a third stage can be executed as a next stage of the first stage, and in a case in which the third stage and the second stage are incomparable, when a transition condition for the first stage has been fulfilled and a transition condition for the second stage has not been fulfilled, the stage information is updated so as to indicate that both the second stage and the third stage to be executed as a next stage of the first stage are set for the workflow.
